# EUROPÄISCHE PATENTSCHRIFT

(11) **EP 1 752 323 B1**
(45) Veröffentlichungstag und Bekanntmachung des Hinweises auf die Patenterteilung: **30.09.2009**
(21) Anmeldenummer: 06014079.5
(22) Anmeldetag: 06.07.2006
(51) Int. Cl.: B60H 1/22

(54) **Fahrzeugheizsystem**
Vehicle heater
Chauffage pour véhicule de moteur

(30) Priorität: 09.08.2005 DE 102005037622
(43) Veröffentlichungstag der Anmeldung: 14.02.2007
(73) Patentinhaber: J. Eberspächer GmbH & Co. KG, 73730 Esslingen (DE)
(72) Erfinder: Pfister, Wolfgang, 73732 Esslingen (DE); Köberle, Christoph, 70736 Fellbach (DE)
(74) Vertreter: Ruttensperger, Bernhard

(56) Entgegenhaltungen:
- EP-A- 1 544 543
- DE-A1- 10 005 376
- DE-A1- 10 355 272
- DE-A1-102005 004 358

## Beschreibung

Die vorliegende Erfindung betrifft ein Fahrzeugheizsystem, umfassend ein Brennkammergehäuse mit einer durch eine Umfangswandung und eine Bodenwandung umgebenen Brennkammer und wenigstens zwei zur Brennkammer offenen Gehäuseansätzen, wobei in wenigstens einem der Gehäuseansätze ein Zündorgan vorgesehen ist, gemäß dem Oberbegriff des Anspruchs 1.

Ein derartiges Fahrzeugheizsystem bzw. eine dafür vorgesehene Brennkammerbaugruppe sind in der nicht vorveröffentlichten deutschen Patentanmeldung 10 2005 04 358 gezeigt. Bei dieser Brennkammerbaugruppe mündet in jeden Gehäuseansatz eine Brennstoffzuführleitung ein, um flüssigen Brennstoff einzuspeisen. Dieser verteilt sich über ein an der Innenseite der Gehäuseansätze vorgesehenes poröses Medium, das in Kontakt steht mit einem porösen Medium an der Innenseite der Umfangswandung des Brennkammergehäuses. Hier wird die Kapillarförderwirkung dieses auch als Verdampfermedium wirksamen porösen Mediums als wesentlicher Mechanismus zum Flüssigkeitstransport innerhalb des Brennkammergehäuses genutzt.

Ein Fahrzeugheizsystem gemäß dem Oberbegriff des Anspruchs 1 ist aus der EP 1 544 543 A2 bekannt. Bei diesem bekannten Fahrzeugheizsystem wird über mehrere Brennstoffleitungen Brennstoff in verschiedene Bereiche einer Brennkammer eingespeist. Diese mehreren Brennstoffleitungen gehen alle von einer Hauptleitung aus, die von einer Brennstoffzuführanordnung gespeist wird.

Aus der DE 100 05 376 A1 ist ein Verbrennungsheizer bekannt, bei welchem ebenfalls über verschiedene Leitungen Brennstoff in verschiedene Bereiche eines Brenners eingespeist werden kann. Diese verschiedenen Leitungen werden von diesen jeweils zugeordneten Brennstoffförderpumpen gespeist.

Die DE 103 55 272 A1 offenbart ein Fahrzeugheizgerät des Zerstäuberbrennertyps. Die Brennstoffzufuhr erfolgt zu zwei Gruppen von Zerstäuberdüsen, von welchen eine Gruppe eine Düse und die andere Gruppe zwei Düsen enthält. Die Brennstoffzufuhr zu den einzelnen Gruppen kann über diesen zugeordnete Ventile freigegeben bzw. unterbrochen werden.

Es ist die Aufgabe der vorliegenden Erfindung, ein Fahrzeugheizsystem der bekannten Art so weiterzubilden, dass bei einfachem Aufbau und einfach zu realisierendem Betrieb das Verbrennungsverhalten an verschiedene Betriebszustände besser angepasst werden kann.

Erfindungsgemäß wird diese Aufgabe gelöst durch ein Fahrzeugheizsystem, umfassend ein Brennkammergehäuse mit einer durch eine Umfangswandung und eine Bodenwandung umgebenen Brennkammer und wenigstens zwei zur Brennkammer offenen Gehäuseansätzen, wobei in wenigstens einem der Gehäuseansätze ein Zündorgan vorgesehen ist, sowie eine Brennstoffzuführanordnung zur Brennstoffzufuhr zu den Gehäuseansätzen, wobei die den verschiedenen Gehäuseansätzen zuzuführende Brennstoffzuführmenge durch die Brennstoffzuführanordnung einstellbar ist.

Durch die Möglichkeit, die Brennstoffzufuhr zu verschiedenen Gehäuseansätzen auch verschieden gestalten zu können, d.h. die Gehäuseansätze gezielt mit geeigneten, sich ggf. unterscheidenden Brennstoffmengen zu versorgen, kann in Abhängigkeit von der momentanen Betriebssituation dort verstärkt Brennstoff eingespeist werden bzw. die Brennstoffzufuhr unterbunden werden, wo dies besonders geeignet ist. Auch kann eine Anpassung an verschiedene Einbausituationen, die selbstverständlich dann verschiedene vor allem schwerkraftbedingte Auswirkungen auf die Brennstoffverteilungscharakteristik haben werden, berücksichtigt werden.

Ferner ist vorgesehen, dass die Brennstoffzuführanordnung eine Ventilanordnung umfasst, durch welche die von einer Brennstoffförderpumpe zugeführte Fördermenge veränderbar auf wenigstens zwei Gehäuseansätze verteilbar ist.

Ferner weist die Ventilanordnung eine brennstoffdruckabhängig variierbare Verteilungscharakteristik auf. Dies erfordert keine speziellen Ansteuermaßnahmen für die Ventilanordnung, sondern lediglich die ohnehin erforderliche definierte Ansteuerung beispielsweise einer Brennstoffförderpumpe.

Um innerhalb der Gehäuseansätze eine definierte Brennstoffverteilung bzw. Weiterleitung in einfacher Art und Weise erlangen zu können, ist vorgesehen, , dass die Gehäuseansätze mit einem porösen Medium ausgekleidet sind und dass die Brennstoffzuführanordnung den Brennstoff in das poröse Medium in den Gehäuseansätzen einspeist.

Ferner wird die Brennstoffabdampfung in Richtung Brennkammer dadurch unterstützt , dass die Umfangswandung wenigstens bereichsweise mit porösem Medium verkleidet ist.

Dabei kann beispielsweise vorgesehen sein, dass durch die Brennstoffzuführanordnung die Brennstoffzufuhr zu wenigstens einem Gehäuseansatz unterbindbar ist bei freigegebener Brennstoffzufuhr zu wenigstens einem weiteren Gehäuseansatz. Ferner ist es vorteilhaft, wenn durch die Brennstoffzuführanordnung die wenigstens einem Gehäuseansatz zuzuführende Brennstoffzuführmenge im Wesentlichen unabhängig von der wenigstens einem weiteren Gehäuseansatz zuzuführenden Brennstoffzuführmenge einstellbar ist.

Die vorliegende Erfindung wird nachfolgend mit Bezug auf die beiliegenden Zeichnungen detailliert beschrieben. Es zeigt:
- Fig. 1: eine Längsschnittansicht einer Brennkammerbaugruppe, geschnitten längs einer Linie I-I in Fig. 2;
- Fig. 2: eine Querschnittansicht der in Fig. 1 dargestellten Brennkammerbaugruppe geschnitten längs einer Linie II-II in Fig. 1;
- Fig. 3: ein die Brennkammerbaugruppe der Fig. 1 und 2 enthaltendes nicht erfindungsgemäßes Fahrzeugheizsystem;
- Fig. 4: einer der Fig. 3 entsprechende Ansicht einer alternativen nicht erfindungsgemäßen Ausgestaltungsart eines Fahrzeugheizsystems.
- Fig. 5: einer der Fig. 3 entsprechende Ansicht einer erfindungsgemäßen Ausgestaltungsart eines Fahrzeugheizsystems.

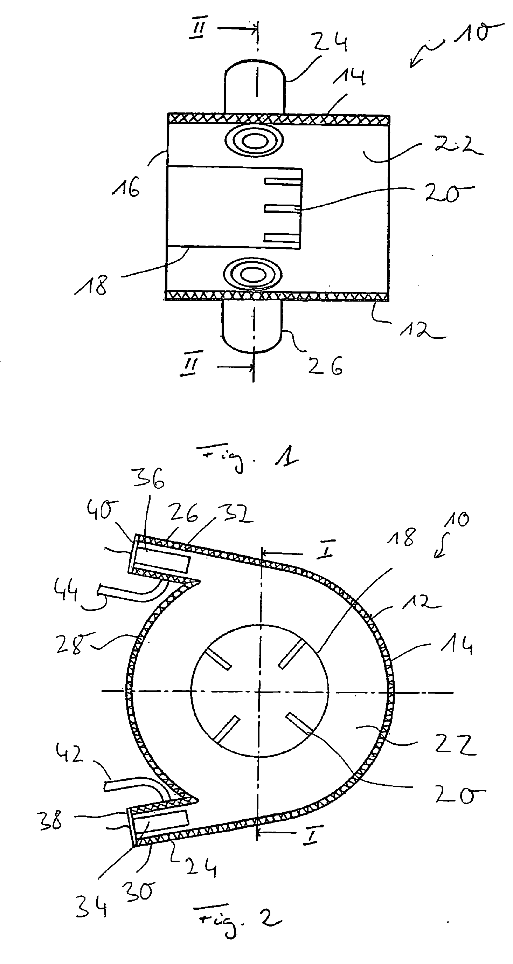

Mit Bezug auf die Fig. 1 und 2 wird nachfolgend zunächst der Aufbau einer Brennkammerbaugruppe 10 beschrieben, wie sie für die vorliegende Erfindung genutzt werden kann. Diese Brennkammerbaugruppe 10 umfasst ein allgemein mit 12 bezeichnetes Brennkammergehäuse mit einer Umfangswandung 14 und einer Bodenwandung 16. Obgleich die Umfangswandung 14 und Bodenwandung 16 hier so dargestellt sind, dass sie beispielsweise integral verbunden sind, ist es selbstverständlich möglich, die Bodenwandung 16 als separate Baugruppe an der Umfangswandung 14 vorzusehen. In einem zentralen Bereich der Bodenwandung 16 ist ein Lufteinlassstutzen 18 vorgesehen, der eine Mehrzahl von Lufteintrittsöffnungen 20 zum Eintritt von Verbrennungsluft in eine im Brennkammergehäuse 12 gebildete Brennkammer 22 aufweist. An der Umfangswandung 14 sind zwei Gehäuseansätze 24, 26 vorgesehen. Diese können, ebenso wie die Umfangswandung 14, aus Metallmaterial aufgebaut sein und mit der Umfangswandung 14 beispielsweise durch Verschweißung oder Verlötung verbunden sein. Die beiden Gehäuseansätze sind, wie man in der Fig. 2 erkennen kann, zur Brennkammer 22 hin offen.

Die Umfangswandung 14 ist an ihrer der Brennkammer 22 zugewandten Seite vorzugsweise vollständig mit einem porösen Verdampfermedium 28 ausgekleidet. Auch die beiden Gehäuseansätze 24, 26 sind mit porösem Medium 30, 32 ausgekleidet, das in Kontakt steht mit dem an der Innenseite der Umfangswandung 14 vorgesehenen porösen Verdampfermedium 28. Diese porösen Medien 28, 30, 32 haben die Charakteristik, dass sie in diese eingespeisten flüssigen Brennstoff aufnehmen und ihn durch Kapillarförderwirkung in ihrem Innenvolumenbereich verteilen.

Man erkennt in Fig. 2 ferner, dass in den beiden Gehäuseansätzen 24, 26 beispielsweise in Form von Glühkerzen ausgestaltete Zündorgane 34, 36 angeordnet sind. Diese können an die Gehäuseansätze 24, 26 in ihren freien Endbereichen abschließenden Verschlusselementen 38, 40 getragen sein. Die Zündorgane 34, 36 erstrecken sich näherungsweise zentrisch innerhalb der langgestreckten, im Wesentlichen zylindrisch gestalteten Gehäuseansätze 24, 26 mit geringem Abstand zu den darin jeweils vorgesehenen porösen Medien 30, 32.

Ferner münden in die beiden Gehäuseansätze 24, 26 jeweilige Leitungsabschnitte 42, 44 einer nachfolgend noch zu beschreibenden Zuführanordnung ein. Über diese Leitungsabschnitte 42, 44 wird flüssiger Brennstoff in die Gehäuseansätze 24, 26 bzw. das darin vorgesehene poröse Medium 30 bzw. 32 eingespeist. Wie bereits ausgeführt, wird sich dieser flüssige Brennstoff durch Kapillarförderwirkung verteilen und somit auch zu der zur Brennkammer 22 bzw. zum Innenbereich der Gehäuseansätze 24, 26 frei liegenden Oberfläche des jeweiligen porösen Mediums 30, 32, 28 gelangen. Dort wird der flüssige Brennstoff abdampfen und somit zusammen mit der in die Brennkammer 22 eingespeisten Verbrennungsluft ein verbrennungsfähiges bzw. zündfähiges Gemisch bilden. Zum Zünden können dann die Zündorgane 34, 36 erregt werden, um lokal die dazu erforderlichen hohen Temperaturen bereitzustellen. Es sei darauf hingewiesen, dass die in den Fig. 1 und 2 gezeigte Brennkammerbaugruppe 10 ein Beispiel repräsentiert und selbstverständlich in verschiedenen Aspekten variierbar ist. So können beispielsweise auch mehr als zwei Gehäuseansätze vorgesehen sein, und es muss nicht notwendigerweise in jedem der Gehäuseanätze ein Zündorgan vorhanden sein. Verschiedene der Gehäuseansätze können auch lediglich dazu dienen, Brennstoff aufzunehmen und in Richtung Brennkammer weiterzuleiten. Auch die Positionierung und Orientierung der Gehäuseansätze kann bezüglich der dargestellten verändert werden. Letztendlich ist es auch möglich, an der Bodenwandung 16 ein poröses Verdampfermedium vorzusehen und die Verbrennungsluftzufuhr in anderer Art und Weise als mit dem dargestellten Stutzen zu bewerkstelligen. Auch ist es nicht erforderlich, wenngleich vorteilhaft, die gesamte Innenseite der Umfangswandung bzw. auch die gesamte Innenoberfläche der Gehäuseansätze mit einem porösen Medium auszukleiden.

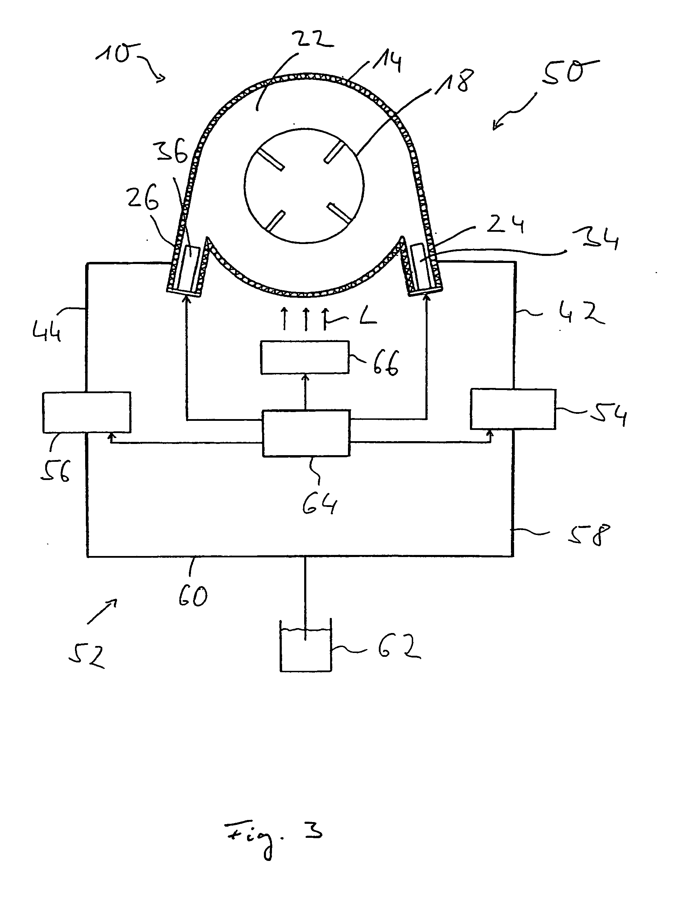

Mit Bezug auf Fig. 3 wird nachfolgend einnicht erfindungsgemäßes Fahrzeugheizsystem 50 beschrieben. Dieses umfasst eine Brennkammerbaugruppe 10, wie sie vorangehend beschrieben worden ist, also eine Brennkammerbaugruppe mit mehreren Gehäuseansätzen, im dargestellten Falle zwei Gehäuseansätzen 24, 26, über welche Brennstoff zugeführt werden kann und von welchen zumindest einer ein Zündorgan 34 bzw. 36 enthält.

Man erkennt in Fig. 3 eine allgemein mit 52 bezeichnete Brennstoffzuführanordnung. Diese umfasst in Zuordnung zu jedem der Gehäuseansätze 24, 26 eine jeweilige Dosierpumpe 54, 56. Die beiden Dosierpumpen 54, 56 nehmen über Leitungen 58, 60 flüssigen Brennstoff von einem Reservoir 62 auf und fördern diesen über die bereits in Fig. 2 erkennbaren Leitungsabschnitte 42, 44 zu den Gehäuseansätzen 24, 26.

Das Fahrzeugheizsystem 50 umfasst ferner eine Ansteuervorrichtung 64, welche den Betrieb des Systems steuert. So stehen die beiden Dosierpumpen 54, 56 unter der Ansteuerung der Ansteuervorrichtung 64, ebenso wie die dargestellten Zündorgane 34, 36. Auch ein schematisch angedeutetes Verbrennungsluftgebläse 66, das die zur Verbrennung erforderliche Luft L in die Brennkammer 22 einspeist, steht unter der Ansteuerung der Ansteuervorrichtung 64. Beruhend auf verschiedenen Parametern steuert die Ansteuervorrichtung 64 den Betrieb der verschiedenen vorangehend beschriebenen Systembereiche, um in dieser Art und Weise das Fahrzeugheizsystem 50 zu starten, also die Verbrennung zu starten bzw. zur Bereitstellung einer bestimmten Heizleistung zu betreiben.

Von Bedeutung ist bei dem in Fig. 3 dargestellten Fahrzeugheizsystem 50, dass auf Grund der Tatsache, dass in Zuordnung zu jedem der Gehäuseansätze 24 bzw. 26 eine eigene Dosierpumpe 54, 56 vorgesehen ist, durch die vermittels der Ansteuervorrichtung 64 erfolgende Ansteuerung dafür gesorgt werden kann, dass jeder der Gehäuseansätze 24, 26 mit der für eine bestimmte Situation geeigneten Brennstoffzuführmenge versorgt wird. Jede der Pumpen 54, 56 kann unabhängig von der anderen betrieben bzw. in ihrer Fördermenge eingestellt werden. Es ist somit beispielsweise möglich, nur einen der beiden Gehäuseansätze 24, 26 mit Brennstoff zu versorgen, und zwar einer variabel einstellbaren Brennstoffzuführmenge, ebenso wie die Versorgung beider Gehäuseansätze 24, 26 ggf. mit gleicher oder unterschiedlicher Brennstoffzuführmenge. Letztendlich ist es auch möglich, keinen der Gehäuseansätze 24, 26 mit Brennstoff zu versorgen, beispielsweise um die Verbrennung zu beenden.

Durch diese voneinander unabhängig einstellbare Brennstoffzufuhr zu den beiden Gehäuseansätzen 24, 26 ergeben sich im Betrieb elementare Vorteile. So wird es beispielsweise möglich, dann, wenn nur in einem der Gehäuseansätze 24, 26 ein Zündorgan vorgesehen ist, in der Startphase auch nur den Gehäuseansatz mit Brennstoff zu versorgen, in dem ein derartiges Zündorgan dann auch zum Starten der Verbrennung genutzt werden kann. Auch bei nur geringer Heizleistung, also Verbrennung nur einer geringen Brennstoffmenge, kann es vorteilhaft sein, nur einen der Gehäuseansätze mit Brennstoff zu versorgen, und zwar der für diese Heizleistung erforderlichen Brennstoffmenge. Die Folge davon ist, dass die Temperatur in diesem Ansatz weiter gesenkt werden kann, da im Vergleich zur Verteilung des Brennstoffs auf zwei Ansätze dort eine größere Brennstoffmenge aufgenommen und auch verdampft wird. Infolgedessen kann die Gefahr der Bildung von Ablagerungen im Bereich eines derartigen Gehäuseansatzes, im Übergangsbereich zur Brennkammer 22 und auch in Belüftungsöffnungen eines jeweiligen Ansatzes gemindert werden. Somit kann über eine längere Betriebslebensdauer hinweg eine gleich bleibende Betriebscharakteristik sichergestellt werden.

Ein weiterer wesentlicher Vorteil ist, dass die gesamt zuzuführende Brennstoffmenge durch zwei Dosierpumpen zu fördern ist, die dann jeweils mit geringerer Förderkapazität ausgestaltet werden können. Dies wiederum hat zur Folge, dass auf Grund kleiner dimensionierter Dosierpumpen eine höhere Arbeitsfrequenz bei getaktetem Betrieb derselben erlangt werden kann, was eine Vergleichmäßigung des Brennstoffstroms und eine Verminderung von Brennstoffpulsationen zur Folge hat. Außerdem können kleiner dimensionierte Dosierpumpen geringere Brennstoffmengen mit höherer Genauigkeit fördern. Weiterhin wird es möglich, durch phasenversetztes Betreiben der beiden Dosierpumpen dann, wenn in beide bzw. alle Gehäuseansätze Brennstoff einzuspeisen ist, eine ebenfalls gleichmäßigere Brennstoffeinspeisung zu erlangen.

Mit einem derartigen System wird es weiterhin möglich, abhängig von der Einbaulage eines derartigen Brennkammergehäuses 10 zu berücksichtigen, dass der Brennstoff sich nicht nur unter Einfluss der Kapillarförderwirkung verteilen wird, sondern auch unter Schwerkrafteinfluss. So kann beispielsweise dann vorgegeben werden, dass in einem weiter oben - oben hier in Höhenrichtung gesehen - liegenden Bereich mehr Brennstoff eingespeist wird, als in einem weiter unten liegenden Bereich, da der Brennstoff ohnehin die Tendenz haben wird, sich schwerkraftbedingt nach unten zu bewegen.

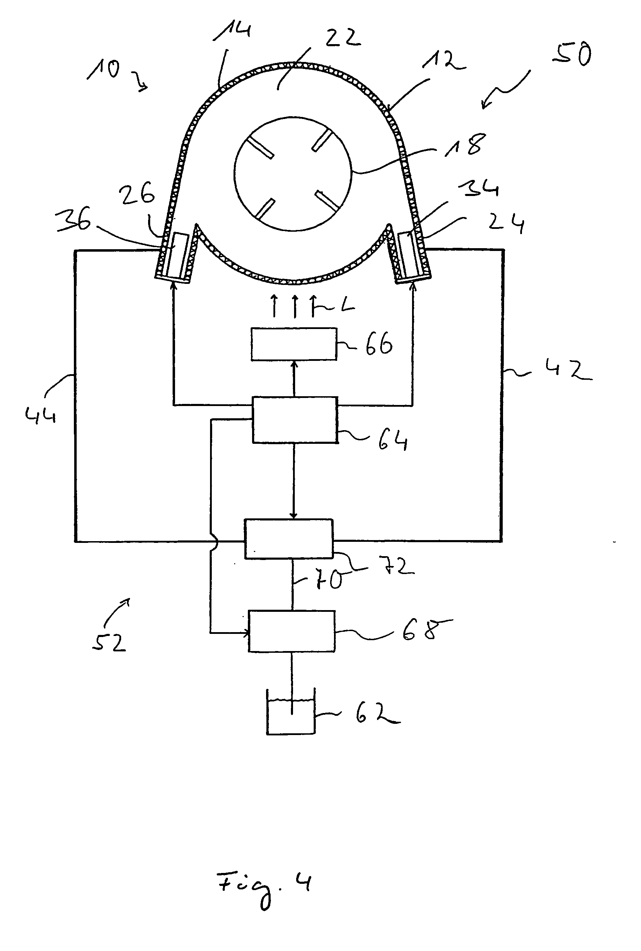

Eine weiteres nicht erfindungsgemäßes Fahrzeugheizsystem 50 ist in Fig. 4 gezeigt. Dieses weist lediglich eine Dosierpumpe 68 auf, die den flüssigen Brennstoff aus dem Reservoir 62 entnimmt und ihn über einen Leitungsabschnitt 70 zu einer Ventilanordnung 72 fördert. Von der Ventilanordnung 72 gehen die beiden Leitungsabschnitte 42, 44 aus, über welche der flüssige Brennstoff dann weiter zu den Gehäuseansätzen 24, 26 gefördert wird. Die beispielsweise als Magnetventil ausgestaltete Ventilanordnung 72 und die Dosierpumpe 68 stehen wiederum unter der Ansteuerung der Ansteuervorrichtung 64, so dass einerseits durch Erregen der Dosierpumpe 68 und andererseits durch definierte Einstellung des Magnetventils bzw. der Ventilanordnung 72 eine entsprechend definierte Brennstoffzufuhr zu den Gehäuseansätzen 24, 26 erlangt wird.

Diese Ventilanordnung 72 bzw. das Magnetventil kann beispielsweise als 3/2-Wegeventil aufgebaut sein. Es kann also vorgesehen sein, dass in einem der beiden Stellzustände der Brennstoff mit einem definiert oder fest vorgegebenen Verteilungsverhältnis, beispielsweise 50/50, zu den beiden Gehäuseansätzen 24, 26 geleitet wird, während im anderen Stellzustand nur zu einem der Gehäuseansätze 24, 26 Brennstoff gefördert wird. Hier kann also in Abhängigkeit vom gewünschten Betrieb dafür gesorgt werden, dass Brennstoff entweder über beide Gehäuseansätze 24, 26 oder nur über einen Gehäuseansatz in den Innenraum des Brennkammergehäuses 12 gelangen kann. In Zuordnung zu den verschiedenen Stellzuständen eines derartigen 3/2 Wegeventils kann dann durch entsprechende Ansteuerung der Dosierpumpe 68 die zu fördernde Brennstoffmenge eingestellt werden, so dass beispielsweise dann, wenn nur einer der Gehäuseansätze 24, 26 mit Brennstoff zu versorgen ist, auch eine entsprechend geringe Brennstoffmenge gefördert wird.

Bei einer alternativen Ausgestaltungsform kann die Ventilanordnung 72 ein 3/4-Wegeventil umfassen. Dieses kann also die vier Stellzustände aufweisen:
- die Brennstoffzufuhr zu beiden Gehäuseansätzen 24, 26 ist unterbunden,
- die Brennstoffzufuhr zum Gehäuseansatz 24 ist unterbunden und die Brennstoffzufuhr zum Gehäuseansatz 26 ist freigegeben,
- die Brennstoffzufuhr zum Gehäuseansatz 24 ist freigegeben und die Brennstoffzufuhr zum Gehäuseansatz 26 ist unterbunden,
- die Brennstoffzufuhr zu beiden Gehäuseansätzen 24, 26 ist freigegeben.

Auf diese Art und Weise wird es möglich, eine Vielzahl verschiedener Betriebszustände bzw. Brennstoffverteilungszustände zu erlangen. So kann beispielsweise vorgesehen sein, dass in Abhängigkeit einer jeweiligen Einbaulage trotz der konstruktiv geschaffenen Möglichkeiten von vier Stellzuständen der Ventilanordnung 72 einer dieser möglichen Stellzustände im tatsächlichen Betrieb nie aktiviert wird, nämlich einer der Stellzustände, bei dem nur einer der Gehäuseansätze 24, 26 mit Brennstoff gespeist wird. Dabei kann beispielsweise vorgesehen sein, dass bei Zufuhr zu nur einem der Gehäuseansätze 24, 26 dies immer über denjenigen Gehäuseansatz erfolgt, der in Höhenrichtung höher positioniert ist. Diese Auswahl, die dann zu einer entsprechenden ansteuerungstechnischen Konsequenz führen kann, kann beispielsweise durch Berücksichtigung eines von einem Lagesensor gelieferten Einbaulagesignals erfolgen. Ferner hat der Einsatz eines derartigen 3/4-Wegeventils den Vorteil, dass auf Grund der Möglichkeiten, dieses sehr nahe an den Gehäuseansätzen 24, 26 zu positionieren, bei Unterbinden der Brennstoffzufuhr zu beiden Gehäuseansätzen 24, 26 oder auch nur zu einem der Gehäuseansätze 24, 26 nur ein vergleichsweise geringer Leitungsabschnitt verbleibt, der noch mit Brennstoff gefüllt ist, so dass ein "Nachlauf" bei der Brennstoffzufuhr minimiert werden kann. Dies hat zur Folge, dass beim Abstellen eines derartigen Fahrzeugheizsystems 50 die dann noch austretende und abdampfende Kohlenwasserstoffmenge minimiert werden kann, mit einer entsprechenden Minimierung der Schadstoffemission.

Selbstverständlich ist es auch möglich, die Ventilanordnung 72 so zu gestalten, dass sie in Zuordnung zu jedem Gehäuseansatz 24, 26 ein eigenes ansteuerbares Ventil umfasst, das unter der Ansteuerung der Ansteuervorrichtung 64 steht und entsprechend dem geforderten Betrieb beispielsweise in einen die Brennstoffzufuhr unterbindenden Zustand gebracht werden kann, einen die Brennstoffzufuhr vollständig frei gebenden Zustand gebracht werden kann oder einen oder mehrere Zwischenzustände gebracht werden kann, um bei Einsatz von nur einer einzigen Dosierpumpe 68 gezielt verschiedene Brennstoffzuführmengen für die mehreren Gehäuseansätze vorsehen zu können.

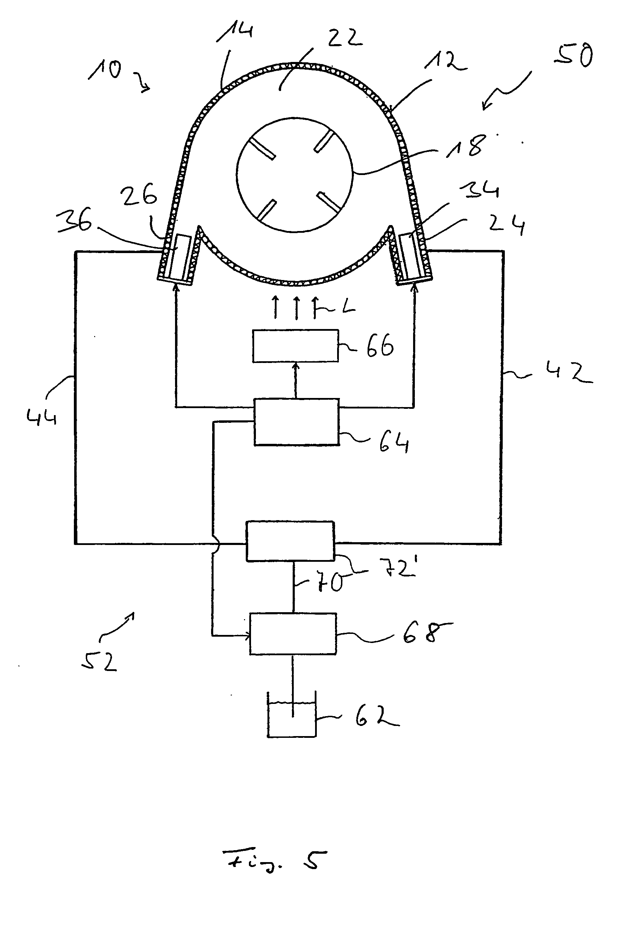

In Fig. 5 ist eine erfindungsgemäße Abwandlung des in Fig. 4 gezeigten Fahrzeugheizsystems dargestellt. Man erkennt hier, dass keine Ansteuerverbindung zwischen der Ansteuervorrichtung 64 und der Ventilanordnung 72' besteht. Diese Ventilanordnung 72' kann dann als Druckventilanordnung, also als druckabhängig schaltende Ventilanordnung ausgebildet sein. Je nachdem, mit welchem Druck die von der Dosierpumpe 68 geförderte Brennstoffmenge in Richtung Ventilanordnung 72' geleitet wird, wird die Ventilanordnung 72' verschiedene Stellzustände einnehmen. So kann beispielsweise vorgesehen sein, dass in der Startphase, in welcher der Brennstoff beispielsweise nur zu einem der Gehäuseansätze 24, 26 geleitet werden soll, beispielsweise demjenigen, der als einziger Gehäuseansatz auch ein Zündorgan enthält, durch entsprechende Ansteuerung der Dosierpumpe 68 dafür gesorgt werden, dass der Brennstoffdruck vergleichsweise gering ist, was auch einer geringeren Brennstofffördermenge entspricht. Die Ventilanordnung 72' wird dann nur denjenigen Strömungsweg freigeben, der zu dem zu versorgenden Gehäuseansatz 24 oder 26 führt. Nach erfolgter Zündung und ggf. Flammstabilisierung kann dann durch Erhöhen der Brennstofffördermenge, also Erhöhen des Brennstoffdrucks im Leitungsabschnitt 70, der Schaltdruck der Ventilanordnung 72' überstiegen werden, so dass beispielsweise eine Ventilfeder des Druckventils überwunden wird und dann auch der zweite Strömungsweg, also der zu dem anderen, beispielsweise nicht mit Zündorgan versehenen Gehäuseansatz führende Strömungsweg freigegeben ist. Hier kann dann vorgesehen sein, dass beide Gehäuseansätze 24, 26 mit der gleichen Brennstoffmenge versorgt werden. Durch entsprechende Ausgestaltung der Ventilanordnung 72' bzw. der zu den beiden Gehäuseansätzen 24, 26 führenden Strömungswege, hier dargestellt durch die Leitungsabschnitte 42, 44, kann auch dafür gesorgt werden, dass beim Freigeben beider Strömungswege gezielt unterschiedliche Brennstoffmengen in die Gehäuseansätze 24, 26 eingespeist werden.

Bei der dargestellten Variante mit einem Zündorgan 34, 36 in jedem Gehäuseansatz 24, 26 besteht dann grundsätzlich auch die Möglichkeit, beispielsweise bei sehr niedrigen Umgebungstemperaturen beide Gehäuseansätze mit Brennstoff zu versorgen, also bereits in der Startphase einen entsprechend hohen Brennstoffdurck bereitzustellen, so dass ein schnellerer Start erfolgen kann. Hier kann letztendlich durch Auswahl des Brennstoffdrucks in der Startphase dafür gesorgt werden, dass beispielsweise nur der Gehäuseansatz 26 versorgt wird, oder, sofern erforderlich, beide Gehäuseansätze 24, 26 versorgt werden und entsprechend auch dann beide Zündorgane 34, 36 erregt werden. Führt die über die Betriebslebensdauer wiederholt vorgenommene Zündung beispielsweise nur mit dem Gehäuseansatz 26 bzw. dem darin vorgesehenen Zündorgan 36 dazu, dass dort verstärkt Ablagerungen auftreten und insofern ein größerer Staudruck erzeugt wird, so ist die Folge, dass auch bei geringerer Brennstofffördermenge der Druck im System ansteigt und somit die Ventilanordnung 72' auch den zweiten Strömungsweg freischaltet, so dass dann der Brennstoff auch verstärkt in den anderen Gehäuseansatz 24 einströmt und dort zur Zündung genutzt werden kann. Durch die zeitlich gesteuerte Erregung der beiden Glühstifte wird es ferner möglich, das Bilden von Ablagerungen zu verhindern bzw. bestehende Ablagerungen bzw. Verkokungen abzutragen.

Es sei darauf hingewiesen, dass selbstverständlich die vorangehend mit Bezug auf die Fig. 3 bis 5 beschriebenen Prinzipien der Erfindung, also die gezielte und auch einstellbare Zufuhr zu verschiedenen der Gehäuseansätze, auch realisierbar ist, wenn mehr als zwei Gehäuseansätze vorhanden sind. Bei der in Fig. 3 gezeigten Ausgestaltungsform würde dies bedeuten, dass beispielsweise in Zuordnung zu jedem zusätzlichen Gehäuseansatz auch eine weitere Dosierpumpe vorzusehen wäre oder dass ggf. zwei Gehäuseansätze zusammen von einer Dosierpumpe gespeist werden. Hier könnte dann durch Vorsehen einer Ventilanordnung, wie sie in den Fig. 4 und 5 gezeigt ist, eine weitere gezielte Brennstoffversorgung für zwei von einer gemeinsamen Pumpe gespeiste Gehäuseansätze erfolgen, während völlig unabhängig davon ein weiterer oder eine weitere Gruppe von Gehäuseansätzen durch eine oder mehrere andere Dosierpumpen gespeist wird. Entsprechendes gilt selbstverständlich auch für die in den Fig. 4 und 5 gezeigten Ausgestaltungsformen. Auch hier können beispielsweise bei Vorsehen von mehr als zwei Gehäuseansätzen mehrere Gehäuseansätze über einen Ventilausgang parallel gespeist werden bzw. in Zuordnung zu jedem Gehäuseansatz ein eigenes schaltbares Ventil vorgesehen sein, um einen jeweiligen Strömungsweg freizugeben oder zu unterbrechen oder entsprechend zu drosseln.

## Patentansprüche

1. Fahrzeugheizsystem, umfassend:
- ein Brennkammergehäuse (12) mit einer durch eine Umfangswandung (14) und eine Bodenwandung (16) umgebenen Brennkammer (22) und wenigstens zwei zur Brennkammer (22) offenen Gehäuseansätzen (24, 26), wobei in wenigstens einem der Gehäuseansätze (24, 26) ein Zündorgan (34, 36) vorgesehen ist,
- eine Brennstoffzuführanordnung (52) zur Brennstoffzufuhr zu den Gehäuseansätzen (24, 26), wobei die den verschiedenen Gehäuseansätzen (24, 26) zuzuführende Brennstoffzuführmenge durch die Brennstoffzuführanordnung (52) einstellbar ist, wobei die Gehäuseansätze (24, 26) mit einem
porösen Medium (30, 32) ausgekleidet sind und die Brennstoffzuführanordnung (52) den, Brennstoff in das poröse Medium (30, 32) in den Gehäuseansätzen (24, 26) einspeist, und wobei
die Umfangswandung (14) wenigstens bereichsweise mit porösem Medium (28) verkleidet ist,
**dadurch gekennzeichnet, dass** die Brennstoffzuführanordnung (52) eine Ventilanordnung (72') umfasst, durch welche die von einer Brennstoffförderpumpe (68) zugeführte Fördermenge veränderbar auf wenigstens zwei Gehäuseansätze (24, 26) verteilbar ist, und
dass die Ventilanordnung (72') eine brennstoffdruckabhängig variierbare Verteilungscharakteristik aufweist.

2. Fahrzeugheizsystem nach Anspruch 1,
**dadurch gekennzeichnet, dass** durch die Brennstoffzuführanordnung (52) die Brennstoffzufuhr zu wenigstens einem Gehäuseansatz (24, 26) unterbindbar ist bei freigegebener Brennstoffzufuhr zu wenigstens einem weiteren Gehäuseansatz (24, 26).

## Claims

1. A vehicle heating system, comprising:
a combustion chamber housing (12) with a combustion chamber (22) enclosed by a circumferential wall (14) and a bottom wall (16) and
comprising at least two housing extensions (24, 26) open towards the combustion chamber (22), an ignition element (34, 36) being provided in at least one of the housing extensions (24, 26),
a fuel supply arrangement (52) for supplying fuel to the housing extensions (24, 26), the quantity of fuel to be supplied to the different housing extensions being adjustable by means of the fuel supply arrangement (52), with the housing extensions (24, 26) being lined by a porous medium (30, 32) and the fuel supply arrangement (52) feeding the fuel into the porous medium (30, 32) inside the housing extensions (24, 26), and
with the circumferential wall (14) being at least partially lined with porous medium (28),
**characterized by** the fuel supply arrangement (52) comprising a valve arrangement (72') whereby the quantity delivered by a fuel delivery pump (68) may be distributed to at least two housing extensions (24, 26) in a modifiable manner, and
by the valve arrangement (72') comprising distribution characteristics which are variable depending on fuel pressure.

2. A vehicle heating system according to claim 1,
**characterized in that** the fuel supply to at least one housing extension (24, 26) may be stopped by the fuel supply arrangement (52) while the fuel supply to at least one further housing extension (24, 26) remains unblocked.

## Revendications

1. Un système de chauffage pour un véhicule, comprenant:
un boîtier d'une chambre de combustion (12) comprenant une chambre de combustion (22) entourée par une paroi circonférentielle (14) et une paroi de fond (16) et comprenant au moins deux extensions de boîtier (24, 26) étant ouvertes envers la chambre de combustion (22), un élément d'allumage (34, 36) étant prévu dans au moins une des extensions de boîtier (24, 26),
un arrangement d'alimentation en combustible (52) pour alimenter les extensions de boîtier (24, 26) en combustible, la quantité de combustible qui est à conduire dans les extensions de boîtier différentes étant ajustable par l'arrangement d'alimentation en combustible (52),
les extensions de boîtier (24, 26) étant recouvertes d'un médium poreux (30, 32) et l'arrangement d'alimentation en combustible (52) conduisant le combustible dans le médium poreux (30, 32) à l'intérieur des extensions de boîtier (24, 26), et
la paroi circonférentielle (14) étant au moins partiellement recouverte d'un médium poreux (28),
**caractérisé par** l'arrangement d'alimentation en combustible (52) comprenant un arrangement de valves (72') permettant ainsi la distribution de la quantité de combustible livrée par une pompe de circulation de combustbile à au moins deux extensions de boîtier (24, 26) d'une manière variable, et
par l'arrangement de valves (72') présentant des caractéristiques de distribution qui sont variables dépendant de la pression du combustible.

2. Un système de chauffage pour un véhicule selon la revendication 1,
**caractérisé en ce que** l'alimentation en combustible pour au moins une extension de boîtier (24, 26) peut être arrêtée par l'arrangement d'alimentation en combustible (52) pendant que l'alimentation en combustible pour au moins une autre extension de boîtier (24, 26) reste débloquée.
